# EUROPEAN PATENT APPLICATION

(11) **EP 1 107 207 A2**
(43) Date of publication of application: **13.06.2001**
(21) Application number: 00310160.7
(22) Date of filing: 15.11.2000
(51) Int. Cl.: G08C 17/02, G08C 23/04

(54) **System and method for remote controlling a plurality of electrical apparatuses**

(30) Priority: 02.12.1999 JP 34368499; 04.08.2000 JP 2000237334
(71) Applicant: Hori, Yohachiro, Tokyo (JP)
(72) Inventor: Hori, Yohachiro, Tokyo (JP)
(74) Representative: Ajello, Michael John

(57) **Abstract**

A remote control system comprises: a terminal device for outputting a control signal corresponding to each operating state of a plurality of electronic apparatuses, and a controlling device for controlling each operating state of the plurality of electronic apparatuses in accordance with the control signal outputted from the terminal device; wherein the terminal device comprises an input part for inputting data relating to an operating state of an electronic apparatus to be controlled, a control signal generating circuit for generating a control signal in accordance with the input data, and a transmitter for transmitting the control signal generated by the control signal generating circuit to the controlling device; and the controlling device comprises a receiver for receiving the control signal transmitted by the transmitter, and a power control circuit for controlling a supply power to be supplied for the electronic apparatus to be controlled in accordance with the control signal received by the receiver.

## Description

### BACKGROUND OF THE INVENTION

### Field of the Invention

The present invention relates to a remote control system and a method for controlling the same, in which a plurality of electronic apparatuses are remotely operated and controlled by one remote controller, respectively.

### Description of the Related Art

In recent years, many domestic appliances having a remote control system for providing the convenient operation thereof for a user have been popularized. The remote control system comprises a transmitter for remotely operating a domestic appliance by a user and a control device built in the domestic appliance, for controlling the domestic appliance by receiving an operation signal which is radio-transmitted by the transmitter.

In case of equipments, such as a plurality of lighting devices, air conditioners, which are attached to a large room in a company or the like, a remote control system is constructed so that a plurality of lighting devices or air conditioners are remotely operated respectively or in each group by a control panel centralizedly set to the room. In this case, operating states, such as switching the lighting devices on or off, switching an operation mode of the air conditioner, changing a temperature condition of the air conditioner or the like, are remotely operated by each switch corresponding to each function, which is set to the control panel.

However, in case of a remote control system adapted to domestic appliances according to an earlier development, it is necessary that a plurality of transmitters should be prepared for each domestic appliance. Because a user is forced to use a plurality of transmitters, the operation efficiency becomes low and the above remote control system is not convenient for a user.

Further, in case of a control panel for remotely operating a plurality of lighting devices, an air conditioner or the like according to an earlier development, the number of switches corresponding to the functions, which are set to the control panel, and the assigned functions are fixed so as to be suitable for equipments. The number of switches and the assigned functions cannot be easily changed after the equipments were attached to a room.

When it is necessary that lighting states (illuminance) of a plurality of lighting devices should be controlled respectively, operation switches for controlling power supply for each lighting device must be further set to the control panel. Because controlling devices, such as a potential transformer for controlling the power supply, must be further provided, there is a problem that the cost of the equipments is increased.

### SUMMARY OF THE INVENTION

The present invention was developed in view of these problems.

An object of the present invention is to provide a remote control system and a method for controlling the same in which a plurality of electronic apparatuses to be controlled can be controlled easily and at a low cost.

That is, in accordance with an aspect of the present invention, a remote control system comprises:
a controlling device which is connected to a plurality of electronic apparatuses, and which has a controlling circuit for controlling each operating state of the plurality of electronic apparatuses by controlling a supply power for the plurality of electronic apparatuses, and
a terminal device for transmitting a control signal corresponding to each operating state of the plurality of electronic apparatuses, to the controlling device through a wireless communication,
wherein the terminal device comprises:
an input part comprising a plurality of switches corresponding to the plurality of electronic apparatuses, respectively,
a control signal generating circuit for detecting an operation signal outputted by operating each switch of the input part to generate a control signal including an identification information for identifying an electronic apparatus to be controlled in accordance with the operation signal,
a coding circuit for coding the control signal generated by the control signal generating circuit to output a coded signal, and
a transmitting circuit for modulating the coded signal outputted from the coding circuit to transmit a modulated signal to the controlling device;
the controlling device comprises:
a receiving circuit for receiving the modulated signal transmitted by the transmitting circuit of the terminal device,
a demodulating circuit for demodulating the modulated signal received by the receiving circuit to output a demodulated signal, and
a decoding circuit for extracting the control signal including the identification information for identifying the electronic apparatus to be controlled, from the demodulated signal outputted from the demodulating circuit, and for decoding the control signal to output a decoded control signal; and
the controlling circuit controls the supply power for the electronic apparatus to be controlled in accordance with the control signal decoded by the decoding circuit.

In accordance with another aspect of the present invention, a method for controlling a remote control system comprising a controlling device which is connected to a plurality of electronic apparatuses, and which has a controlling circuit for controlling each operating state of the plurality of electronic apparatuses by controlling a supply power for the plurality of electronic apparatuses, and a terminal device for transmitting a control signal corresponding to each operating state of the plurality of electronic apparatuses, to the controlling device through a wireless communication by operating an input part having a plurality of switches corresponding to each electronic apparatus; the method comprises the steps of:
in the terminal device,
detecting an operation signal outputted by operating each switch of the input part and generating a control signal including an identification information for identifying an electronic apparatus to be controlled in accordance with the operation signal outputted by operating each switch of the input part,
coding the generated control signal to output a coded signal, and
modulating the outputted coded signal and transmitting a modulated signal to the controlling device; and
in the controlling device,
receiving the modulated signal transmitted by the terminal device,
demodulating the received modulated signal to output a demodulated signal,
extracting the control signal including the identification information for identifying the electronic apparatus to be controlled, from the outputted demodulated signal, and decoding the control signal to output a decoded control signal, and
controlling the supply power for the electronic apparatus to be controlled in accordance with the decoded control signal.

The electronic apparatus may be various domestic appliances, such as, an electric fan, a refrigerator, a freezer, a rice cooker, a lighting device, an air conditioner or the like, a robot, such as, a robot for industry or the like and the other apparatuses which are operated by electric power.

According to the present invention, because a plurality of electronic apparatuses are assigned to a plurality of switches which the terminal device comprises, it is possible for a user to easily control an operating state of a desired electronic apparatus only by operating the switch corresponding to the electronic apparatus to be controlled with the terminal device disposed close at hand. Further, because the operating states of a plurality of different types of electronic apparatuses having different functions are controlled by one terminal device, it is not necessary that one terminal device is selected from a plurality of terminal devices according to the electronic apparatus to be controlled, like an earlier development. It is possible that a user operates the remote control system more easily. It is more convenient for a user to use the remote control system.

In the above remote control system, the input part of the terminal device may further comprise a common switch for operating the plurality of electronic apparatuses together;
the control signal generating circuit may generate a common control signal including a plurality of pieces of identification information for identifying the plurality of electronic apparatuses in accordance with an operation signal outputted when an operation of the common switch of the input part is detected;
the coding circuit may code the common control signal generated by the control signal generating circuit to output a coded signal;
the transmitting circuit may modulate the coded signal outputted from the coding circuit to transmit a modulated signal to the controlling device;
the decoding circuit of the controlling device may extract the common control signal from the demodulated signal outputted from the demodulating circuit and may decode the common control signal to output a decoded common control signal; and
the controlling circuit may control the supply power for the plurality of electronic apparatuses to be controlled together in accordance with the decoded common control signal outputted from the decoding circuit.

In the above method, the input part of the terminal device may further comprise a common switch for operating the plurality of electronic apparatuses together;
in the terminal device,
the control signal generating step may be carried by generating a common control signal including a plurality of pieces of identification information for identifying the plurality of electronic apparatuses in accordance with an operation signal outputted when an operation of the common switch of the input part is detected,
the coding step may be carried out by coding the common control signal generated by the control signal generating step to output a coded signal, and
the transmitting step may be carried out by modulating the coded signal outputted by the coding step and transmitting a modulated signal to the controlling device; and
in the controlling device,
the decoding step may be carried out by extracting the common control signal from the demodulated signal outputted by the demodulating step and decoding the common control signal to output a decoded common control signal, and
the controlling step may be carried out by controlling the supply power for the plurality of electronic apparatuses to be controlled together in accordance with the decoded common control signal outputted by the decoding step.

Because the supply power for a plurality of electronic apparatuses can be easily controlled by one switch operation, it is possible for a user to operate the remote control system more easily. It is more convenient for a user to use the remote control system.

In the above remote control system, the plurality of electronic apparatuses may be arranged in a plurality of different rooms, respectively;
the input part of the terminal device may comprise a plurality of switches by room, for operating the plurality of electronic apparatuses arranged in the plurality of different rooms by one room;
the control signal generating circuit may detect an operation signal outputted by operating each switch by room to generate a control signal by room, which includes an identification information for identifying an electronic apparatus to be controlled, in accordance with the operation signal outputted by operating each switch by room;
the coding circuit may code the control signal by room, which is generated by the control signal generating circuit, to output a coded signal;
the transmitting circuit may modulate the coded signal outputted from the coding circuit to transmit a modulated signal to the controlling device;
the decoding circuit of the controlling device may extract the control signal by room from the demodulated signal outputted from the demodulating circuit and may decode the control signal by room to output a decoded control signal by room; and
the controlling circuit may control the supply power for an electronic apparatus to be controlled, which is arranged in a room corresponding to the decoded control signal by room, which is outputted from the decoding circuit.

In the above method, the plurality of electronic apparatuses may be arranged in a plurality of different rooms, respectively;
the input part of the terminal device may comprise a plurality of switches by room, for operating the plurality of electronic apparatuses arranged in the plurality of different rooms by one room;
in the terminal device,
the control signal generating step may be carried out by detecting an operation signal outputted by operating each switch by room and may be carried out by generating a control signal by room, which includes an identification information for identifying an electronic apparatus to be controlled, in accordance with the operation signal outputted by operating each switch by room,
the coding step may be carried out by coding the control signal by room, which is generated by the control signal generating step, to output a coded signal, and
the transmitting step may be carried out by modulating the coded signal outputted by the coding step to transmit a modulated signal to the controlling device; and
in the controlling device,
the decoding step may be carried out by extracting the control signal by room from the demodulated signal outputted by the demodulating step and may be carried out by decoding the control signal by room to output a decoded control signal by room, and
the controlling step may be carried out by controlling the supply power for an electronic apparatus to be controlled, which is arranged in a room corresponding to the decoded control signal by room, which is outputted by the decoding step.

Because the supply power for a plurality of electronic apparatuses arranged in a plurality of different rooms respectively, can be easily controlled by a switch operation in one terminal device, it is possible for a user to operate the remote control system more easily. It is more convenient for a user to use the remote control system.

In the above remote control system, the plurality of electronic apparatuses may be arranged on a plurality of different floors in a building, respectively;
the input part of the terminal device may comprise a plurality of switches by floor, for operating the plurality of electronic apparatuses arranged on the plurality of different floors by one floor;
the control signal generating circuit may detect an operation signal outputted by operating each switch by floor to generate a control signal by floor, which includes an identification information for identifying an electronic apparatus to be controlled, in accordance with the operation signal outputted by operating each switch by floor;
the coding circuit may code the control signal by floor, which is generated by the control signal generating circuit, to output a coded signal;
the transmitting circuit may modulate the coded signal outputted from the coding circuit to transmit a modulated signal to the controlling device;
the decoding circuit of the controlling device may extract the control signal by floor from the demodulated signal outputted from the demodulating circuit and decodes the control signal by floor to output a decoded control signal by floor; and
the controlling circuit may control the supply power for an electronic apparatus to be controlled, which is arranged on a floor corresponding to the decoded control signal by floor, which is outputted from the decoding circuit.

In the above method, the plurality of electronic apparatuses may be arranged on a plurality of different floors in a building, respectively;
the input part of the terminal device may comprise a plurality of switches by floor, for operating the plurality of electronic apparatuses arranged on the plurality of different floors by one floor;
in the terminal device,
the control signal generating step may be carried out by detecting an operation signal outputted by operating each switch by floor and may be carried out by generating a control signal by floor, which includes an identification information for identifying an electronic apparatus to be controlled, in accordance with the operation signal outputted by operating each switch by floor,
the coding step may be carried out by coding the control signal by floor, which is generated by the control signal generating step, to output a coded signal, and
the transmitting step may be carried out by modulating the coded signal outputted by the coding step to transmit a modulated signal to the controlling device; and
in the controlling device,
the decoding step may be carried out by extracting the control signal by floor from the demodulated signal outputted by the demodulating step and may be carried out by decoding the control signal by floor to output a decoded control signal by floor, and
the controlling step may be carried out by controlling the supply power for an electronic apparatus to be controlled, which is arranged on a floor corresponding to the decoded control signal by floor, which is outputted by the decoding step.

Because the supply power for a plurality of electronic apparatuses arranged on a plurality of different floors respectively, can be easily controlled by a switch operation in one terminal device, it is possible for a user to operate the remote control system more easily. It is more convenient for a user to use the remote control system.

In the above remote control system, the controlling circuit of the controlling device may further comprise:
a conductive amount setting circuit for setting a conductive amount of the supply power for an electronic apparatus to be controlled, in accordance with the control signal decoded by the decoding circuit, and
a supply power controlling circuit for controlling the supply power to be supplied for the electronic apparatus to be controlled, in accordance with the conductive amount set by the conductive amount setting circuit.

In the above method, the controlling step of the controlling device may be further carried out by setting a conductive amount of the supply power for an electronic apparatus to be controlled, in accordance with the control signal decoded by the decoding step, and may be carried out by controlling the supply power to be supplied for the electronic apparatus to be controlled, in accordance with the conductive amount set by the conductive amount setting step.

Because the control circuit portion for controlling the supply power for a plurality of electronic apparatuses to be controlled, is constructed by a logic circuit, the controlling device can be compacted and can be manufactured at a low cost. Further, the cost of installing the remote control system can decrease. Because the controlling device can be compacted, the space for installing the remote control system can be small. The position for installing the remote control system can be set optionally.

In the above remote control system, the controlling circuit of the controlling device may further comprise a conductive amount storing circuit for storing the conductive amount set by the conductive amount setting circuit at predetermined time intervals in sequence; and
the supply power controlling circuit cyclically may control the supply power to be supplied for the electronic apparatus to be controlled from a minimum value to a maximum value, in accordance with the conductive amount stored in the conductive amount storing circuit in sequence.

In the above method, the controlling step of the controlling device may be further carried out by storing the conductive amount set by the conductive amount setting step at predetermined time intervals in sequence; and
the supply power controlling step may be carried out by cyclically controlling the supply power to be supplied for the electronic apparatus to be controlled from a minimum value to a maximum value, in accordance with the conductive amount stored by the conductive amount storing step in sequence.

Because the supply power for a plurality of electronic apparatuses to be controlled, which are assigned to each key of the terminal device, can be adjusted only by continuing to push the key, for example, the illuminance of the lighting device using incandescent lamps can be easily adjusted.

In the above remote control system, the control signal generating circuit of the terminal device further may comprise an operating state holding circuit for holding an operation signal of a switch operated initially, when the plurality of switches of the input part are operated; and
the control signal generating circuit may generate the control signal including the identification information for identifying the electronic apparatus to be controlled, in accordance with the operation signal held by the operating state holding circuit.

In the above method, the control signal generating step of the terminal device may be further carried out by holding an operation signal of a switch operated initially, when the plurality of switches of the input part are operated; and
the control signal generating step may be carried out by generating the control signal including the identification information for identifying the electronic apparatus to be controlled, in accordance with the operation signal held by the operation signal holding step.

For example, when a plurality of switches are operated for a short time, only the initial key operation is valid. Therefore, a plurality of electronic apparatuses are prevented from malfunctioning. The remote control system becomes more reliable.

In the above remote control system, the transmitting circuit of the terminal device and the receiving circuit of the controlling circuit may comprise a set of wireless communication function for transmitting and receiving the modulated signal by using a wireless signal having a predetermined frequency.

In the above method, the transmitting step of the terminal device and the receiving step of the controlling circuit may be carried out by transmitting and receiving the modulated signal by using a wireless signal having a predetermined frequency.

Because the communication between the terminal device and the controlling device is carried out by a wireless communication, the position for installing the controlling device can be set optionally according to the positions for installing the electronic apparatuses to be controlled. The remote control system can be installed more freely. Because the consumption power of the terminal device can considerably decrease by a wireless communication using, for example, weak radio wave, the running cost thereof can decrease.

In the above remote control system, the controlling device may control light-on states of a plurality of lighting devices as the plurality of electronic apparatuses to be controlled.

In the above method, the controlling step of the controlling device may be carried out by controlling light-on states of a plurality of lighting devices as the plurality of electronic apparatuses to be controlled.

Because the remote control system which can control a plurality of lighting devices by using a remote controller disposed close at hand, is adapted to a plurality of lighting devices which are disposed in a building and of which the light-on/light-off states have been often controlled by a switch box or the like, it is possible that a user operates the remote control system more easily when a plurality of lighting devices are turned on or off. It is more convenient for a user to use the remote control system. That is, the number of the remote controllers used in the remote control system according to the present invention is small as compared with a remote control system according to an earlier development. A number of lighting devices can be easily controlled. The cost for the lighting device can decrease.

In accordance with another aspect of the present invention, a remote control system comprises:
a terminal device for outputting a control signal corresponding to each operating state of a plurality of electronic apparatuses, and
a controlling device for controlling each operating state of the plurality of electronic apparatuses in accordance with the control signal outputted from the terminal device;
wherein the terminal device comprises an input part for inputting data relating to an operating state of an electronic apparatus to be controlled, a control signal generating circuit for generating a control signal in accordance with the input data, and a transmitter for transmitting the control signal generated by the control signal generating circuit to the controlling device; and
the controlling device comprises a receiver for receiving the control signal transmitted by the transmitter, and a power control circuit for controlling a supply power to be supplied for the electronic apparatus to be controlled in accordance with the control signal received by the receiver.

### BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;
FIG. 1 is a block diagram showing a principal construction of an inside of a remote controller which is used for a remote control system according to an embodiment of the present invention;
FIG. 2 is a block diagram showing a principal construction of an inside of a controlling device which is used for a remote control system according to the embodiment;
FIG. 3 is a block diagram showing a principal construction of an inside of a power control unit shown in FIG. 2;
FIG. 4 is a block diagram showing a principal construction of an inside of a power supply unit shown in FIG. 3;
FIGS. 5A and 5B are views showing concrete examples of a functional assignment to a key input part of the remote controller shown in FIG. 1;
FIG. 6 is a view showing an example of an arrangement of lighting devices in a building, in accordance with a key assignment of the key input part of the remote controller shown in FIG. 5A; and
FIG. 7 is a view showing an example of an arrangement of lighting devices in a building, in accordance with a key assignment of the key input part of the remote controller shown in FIG. 5B.

### PREFERRED EMBODIMENT OF THE INVENTION

Hereinafter, an embodiment to which the remote control system according to the present invention is applied will be explained below.

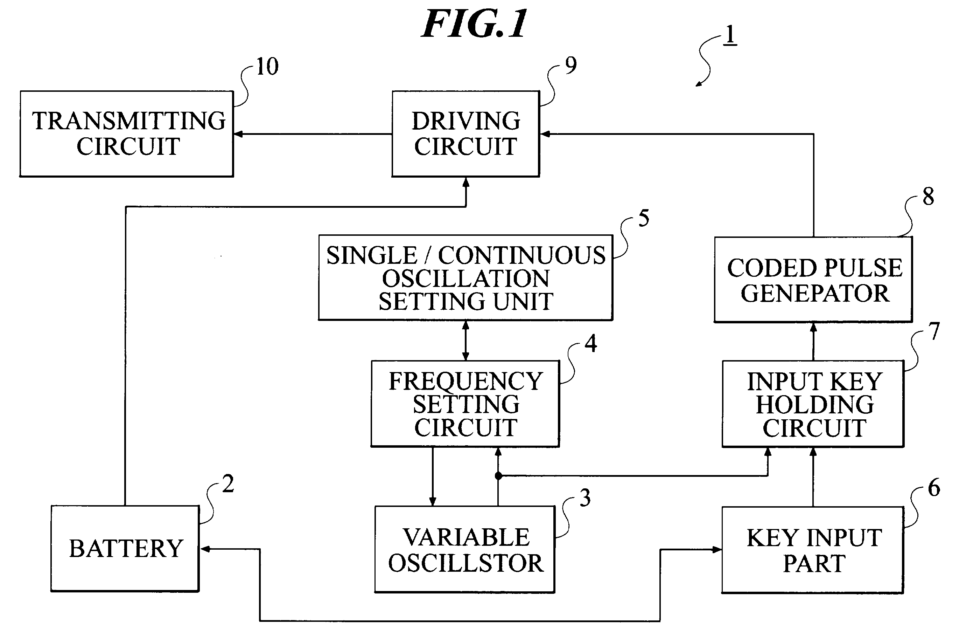

FIGS. 1 to 7 are views showing a remote control system according to an embodiment of the present invention. In this embodiment, a remote control system for controlling a plurality of lighting devices (for example, lighting devices using incandescent lamps) will be explained. However, the present invention is not limited to this. The remote control system according to the present invention can control various types of electronic apparatus, such as an air conditioner.

FIG. 1 is a block diagram showing a principal construction of a remote controller 1 which is used for a remote control system according to the embodiment of the present invention.

In FIG. 1, the remote controller 1 comprises a battery 2, a variable oscillator 3, a frequency setting circuit 4, a single/continuous oscillation setting unit 5, a key input part 6, an input key holding circuit 7, a coded pulse generator 8, a driving circuit 9, a transmitting circuit 10 and the like.

The battery 2 is, for example, two 1.5 V (volts) batteries which are connected to each other in series to use the remote controller 1. The battery 2 comprises a power circuit (not shown in the figure) for supplying a power supply voltage of the battery 2 to the driving circuit 9 and other blocks when a key operation is carried out by the key input part 6.

The variable oscillator 3 comprises an oscillating circuit having a crystal oscillator, an LC oscillator or the like, and an oscillation frequency varying circuit for varying a reference oscillation signal having a predetermined frequency, which is oscillated by the oscillating circuit, within a predetermined frequency range. The variable oscillator 3 outputs the oscillation signal having a frequency within the predetermined frequency range, to the frequency setting circuit 4 and the input key holding circuit 7. The variable oscillator 3 outputs the oscillation signal having a frequency corresponding to an oscillation frequency setting value outputted from the frequency setting circuit 4 on the basis of an input key signal held by the input key holding circuit 7, to the frequency setting circuit 4 and the input key holding circuit 7.

The frequency setting circuit 4 sets an oscillation frequency on the basis of the input key signal held by the input key holding circuit 7. The frequency setting circuit 4 outputs the oscillation frequency setting value to the variable oscillator 3 in order to determine an oscillation frequency of the oscillation signal to be outputted from the variable oscillator 3. When the input key signal is inputted into the frequency setting circuit 4, the frequency setting circuit 4 sets an oscillation state of the variable oscillator 3 by switching between a "single oscillation" and a "continuous oscillation" according as an oscillation mode set by the single/continuous oscillation setting unit 5 is the "single oscillation" or the "continuous oscillation."

The single/continuous oscillation setting unit 5 selectively sets the "single oscillation" or the "continuous oscillation" as an oscillation mode to set the oscillation state of the variable oscillator 3.

The key input part 6 comprises a plurality of key switches (not shown in the figures). A selecting function of each lighting device to be remotely operated, an illuminance adjusting function thereof and the like are assigned to each key switch. A key input signal of a key switch pushed by a user is outputted to the input key holding circuit 7. Further, by pushing a designed key switch continuously, the key input signals are continuously outputted to the input key holding circuit 7. The illuminance of the lighting device selected by the pushed key can be adjusted continuously. In this case, the illuminance of the lighting device is continuously and cyclically adjusted from a light-out state to a maximum illuminance by using a controlling device 20 which will be explained below. Further, the adjustment is stopped at an optional illuminance.

The input key holding circuit 7 detects a key operation state designated by a user on the basis of the key input signal outputted from the key input part 6. In case that a plurality of key input signals are inputted into the input key holding circuit 7 for a short time, the input key holding circuit 7 holds the key input signal inputted thereinto initially to output the held key input signal to the frequency setting unit 5. The input key holding circuit 7 outputs the oscillation signal outputted from the variable oscillator 3 after the oscillation frequency is set according to the key input signal, to the coded pulse generator 8. In case that a desired key switch is continuously pushed in order to continuously input the key input signals outputted from the key input part 6, the input key holding circuit 7 holds the key input signals at predetermined intervals (for example, at several msec. (milliseconds) intervals). The input key holding circuit 7 outputs the continuously held key input signal to the frequency setting circuit 4 in sequence. Further, the input holding circuit 7 outputs the oscillation signal outputted from the variable oscillator 3 after the oscillation frequency is set according to the continuously held key input signals, to the coded pulse generator 8 in sequence.

The coded pulse generator 8 generates a coded pulse signal including control information (identification information of each lighting device, variable illuminance setting information and the like) corresponding to each lighting device to be controlled on the basis of the oscillation signal outputted from the input key holding circuit 7. The coded pulse generator 8 outputs the generated coded pulse signal to the driving circuit 9. In case that the same oscillation signals are continuously outputted from the input key holding circuit 7, the coded pulse generator 8 continuously generates coded pulse signals including control information (identification information of each lighting device, variable illuminance setting information and the like) corresponding to each lighting device to be controlled. Further, the coded pulse generator 8 outputs the continuously generated coded pulse signals to the driving circuit 9 in sequence.

The driving circuit 9 controls a drive of the transmitting circuit 10 on the basis of the coded pulse signal outputted from the coded pulse generator 8 in order to command the transmitting circuit 10 to transmit an infrared signal or a radio signal, which includes the control code corresponding to each lighting device to be controlled. In case that the coded pulse signals are continuously outputted from the coded pulse generator 8, the driving circuit 9 continuously controls a drive of the transmitting circuit 10 on the basis of the continuously outputted coded pulse signals. Further, the driving circuit 9 commands the transmitting circuit 10 to transmit an infrared signal or a radio signal, which includes the control code corresponding to each lighting device to be controlled, in sequence.

The transmitting circuit 10 comprises, for example, a modulator for modulating an input signal to an infrared signal or a radio signal, or the like. A drive of the transmitting circuit 10 is controlled by a drive control signal based on the coded pulse signal outputted from the driving circuit 9. The transmitting circuit 10 modulates an input signal to an infrared signal having a predetermined frequency (for example, 38 kilohertz (kHz)) or a radio signal having a predetermined frequency (for example, 230 megahertz (MHz)), which includes control codes corresponding to each lighting device to be controlled in order to transmit it to a controlling device. In case that a drive of the transmitting circuit 10 is continuously controlled by drive control signals which are continuously outputted from the driving circuit 9, the transmitting circuit 10 continuously transmits an infrared signal having a predetermined frequency or a radio signal having a predetermined frequency, which includes control codes corresponding to each lighting device to be controlled.

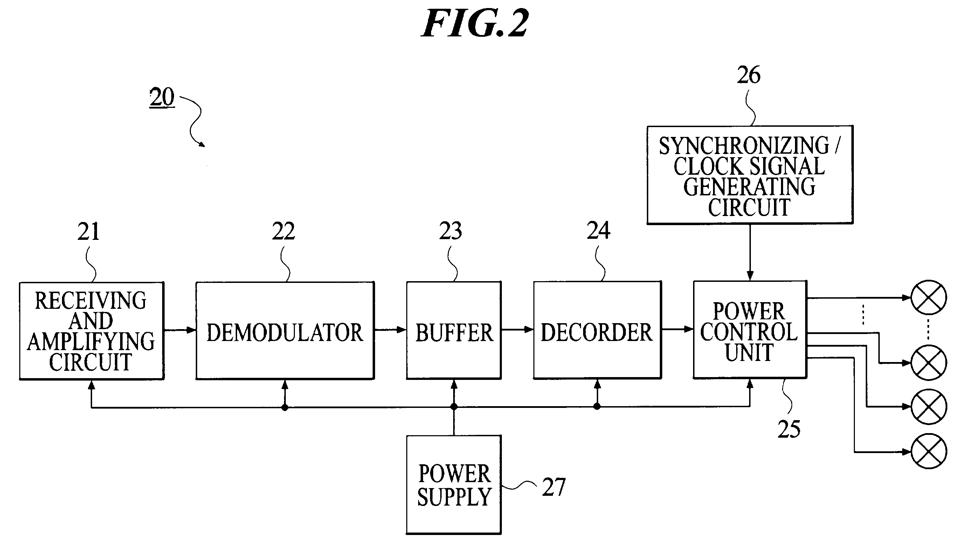

FIG. 2 is a block diagram showing a principal construction of a controlling device 20 which is used for the remote control system according to the embodiment.

In FIG. 2, the controlling device 20 comprises a receiving and amplifying circuit 21, a demodulator 22, a buffer 23, a decoder 24, a power control unit 25, a synchronizing/clock signal generating circuit 26, a power supply 27 and the like.

The receiving and amplifying circuit 21 comprises a receiver and an amplifier. The receiver receives an infrared signal or a radio signal transmitted by the transmitting circuit 10 of the remote controller 1. The amplifier amplifies the received signal received by the receiver at a predetermined amplification factor in order to output it to the demodulator 22. Further, in the receiving and amplifying circuit 21, the receiver continuously receives the infrared signals or the radio signals, which are continuously transmitted by the transmitting circuit 10. The amplifier amplifies the received signals which are continuously received by the receiver, at a predetermined amplification factor in sequence, in order to output them to the demodulator 22 in sequence.

The demodulator 22 demodulates the amplified received signal outputted from the receiving and amplifying circuit 21 in order to extract a coded pulse signal. The demodulator 22 outputs the extracted coded pulse signal to the buffer 23. In case that the amplified received signals are continuously outputted from the receiving and amplifying circuit 21, the demodulator 22 demodulates the received signals which are continuously outputted from the receiving and amplifying circuit 21 in sequence in order to extract coded pulse signals. The demodulator 22 outputs the coded pulse signals extracted in sequence to the buffer 23 in sequence.

The buffer 23 reshapes a waveform of the coded pulse signal outputted from the demodulator 22 in order to output the reshaped signal to the decoder 24. The buffer 23 reshapes waveforms of the coded pulse signals which are continuously outputted from the demodulator 22 in sequence in order to output the reshaped signals to the decoder 24 in sequence.

The decoder 24 decodes the coded pulse signal outputted from the buffer 23. The decoder 24 extracts a control signal included in the coded pulse signal and corresponding to a lighting device to be controlled. The decoder 24 outputs the extracted control signal to the power control unit 25. In case that the coded pulse signals are continuously outputted from the buffer 23, the decoder 24 decodes the coded pulse signals in sequence, which are continuously outputted. The decoder 24 extracts control signals included in the coded pulse signals and corresponding to a lighting device to be controlled, in sequence. The decoder 24 outputs the extracted control signals to the power control unit 25 in sequence.

The synchronizing/clock signal generating circuit 26 generates a synchronous signal synchronized with an alternating current power supply frequency and generates a clock signal by dividing a pulse outputted from the alternating current power supply in sequence in order to output them to the power control unit 25 in sequence.

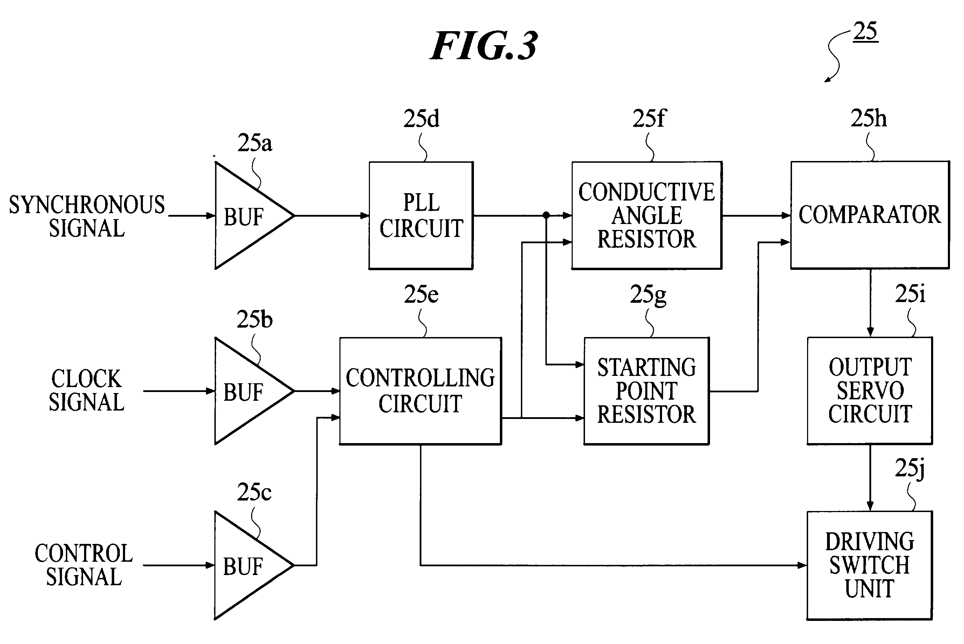

As shown in the block diagram of FIG. 3, the power control unit 25 comprises buffers 25a to 25c, a PLL circuit 25d, a controlling circuit 25e, a conductive angle resistor 25f, a starting point resistor 25g, a comparator 25h, an output servo circuit 25i and a driving switch unit 25j.

The buffer 25a reshapes waveforms of the synchronous signals outputted from the synchronizing/clock signal generating circuit 26 in sequence in order to output them to the PLL circuit 25d in sequence. The buffer 25b reshapes waveforms of the clock signals outputted from the synchronizing/clock signal generating circuit 26 in sequence in order to output them to the controlling circuit 25e in sequence. The buffer 25c reshapes a waveform of the control signal outputted from the decoder 24 in order to output it to the controlling circuit 25e. In case that the control signals are continuously outputted from the decoder 24, the buffer 25c reshapes the waveforms thereof in sequence in order to output the controlling circuit 25e in sequence.

The PLL circuit 25d fixes phases of the synchronous signals outputted from the buffer 25a in sequence in order to output them to the conductive angle resistor 25f and the starting point resistor 25g.

The controlling circuit 25e outputs a selection signal for selecting a lighting device to be controlled to the driving switch unit 25j in accordance with a control information (an identification information of a lighting device, a variable illuminance setting information thereof and the like) included in the control signal outputted from the buffer 25c. The controlling circuit 25e generates numeral data indicative of a phase angle starting point for setting a phase angle at which a supply of an alternating current power for the lighting device to be controlled starts, in accordance with the variable illuminance setting information and the clock signal outputted from the buffer 25b. The controlling circuit 25e outputs the numeral data to the conductive angle resistor 25f and the starting point resistor 25g. In case that the control signals are continuously outputted from the buffer 25c, the controlling circuit 25e outputs selection signals for selecting a lighting device to be controlled to the driving switch unit 25j in sequence in accordance with a control information (an identification information of a lighting device, a variable illuminance setting information thereof and the like) included in the control signals outputted from the buffer 25c. The controlling circuit 25e generates numeral data indicative of a phase angle starting point for setting a phase angle at which a supply of an alternating current power for the lighting device to be controlled starts, in sequence in accordance with the variable illuminance setting information and the clock signal outputted from the buffer 25b. The controlling circuit 25e outputs the numeral data to the conductive angle resistor 25f and the starting point resistor 25g in sequence.

The conductive angle resistor 25f holds synchronous signal waveforms outputted from the PLL circuit 25d in sequence by synchronizing with the clock signal in sequence. At the timing of inputting the numeral data from the controlling circuit 25g, the output of the synchronous signal waveform data held in sequence to the comparator 25h starts.

The starting point resistor 25g holds the numeral data outputted from the controlling circuit 25e by synchronizing with the clock signal. The starting point resistor 25g outputs the held numeral data to the comparator 25h repeatedly by synchronizing with the synchronous signal outputted from the PLL circuit 25d.

In the starting point resistor 25g, the numeral data is held until the next numeral data to be held is outputted from the controlling circuit 25e.

The comparator 25h repeatedly compares the conductive angle of the synchronous signal waveform data outputted from the conductive angle resistor 25f in sequence, with the numeral data which is repeatedly outputted from the starting point resistor 25g in order to output the result of the comparison ( (conductive angle) - (numeral data) : phase difference) to the output servo circuit 25i in sequence.

When the result of the comparison (phase difference) outputted from the comparator 25h becomes not less than a predetermined value, the output servo circuit 25i generates driving signals for setting a conducting time corresponding to the phase difference in sequence and outputs the driving signals to the driving switch selected by the controlling circuit 25e in the driving switch unit 25j in sequence.

The driving switch unit 25j comprises a plurality of driving switches in accordance with the number of the lighting devices to be controlled. A plurality of driving switches are inserted into alternating current power supply lines (not shown in the figures) of each lighting device. When the driving switch for driving a lighting device to be controlled is selected by the controlling circuit 25e and the driving signal is outputted from the output servo circuit 25i to the selected driving switch, the selected driving switch supplies an alternating current power which is supplied by an external alternating current power supply (not shown in the figure), for a lighting device to be controlled during the conducting time set by the driving signal. The driving switch unit 25j adjusts the illuminance of the lighting device to be controlled to an illuminance designated by the remote controller 1.

In the driving switch unit 25j, in case that the selection signals are continuously outputted from the controlling circuit 25e, when the driving signals are outputted in sequence from the output servo circuit 25i to the driving switch selected by the selection signal, the selected driving switch supplies an alternating current power which is supplied from an external alternating current power supply (not shown in the figure), for a lighting device to be controlled in sequence during the conducting time set in sequence by the driving signals which are continuously outputted. The driving switch unit 25j cyclically and continuously controls the illuminance of the lighting device to be controlled, at an optical illuminance designated by the remote controller 1 from a light-out state to a maximum illuminance.

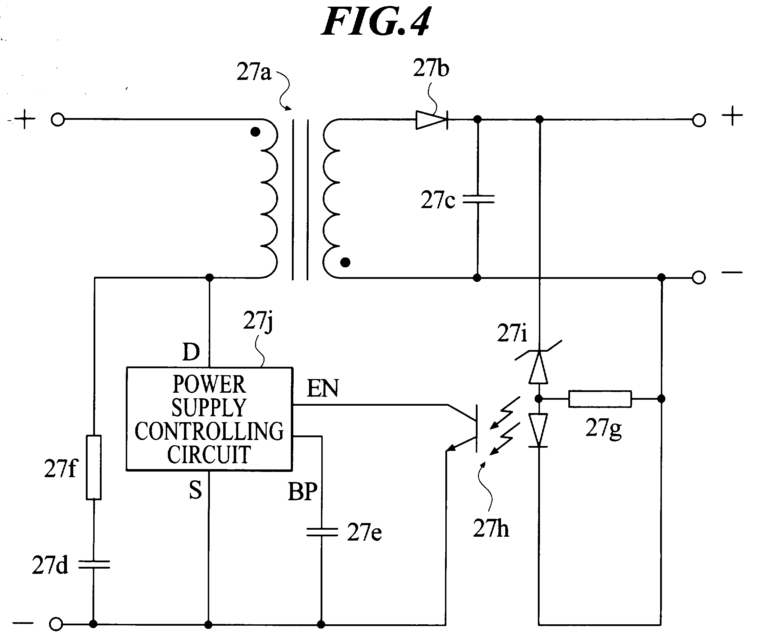

The power supply 27 comprises a switching power supply shown in FIG. 4 as a direct current power supply for supplying a necessary direct current power supply voltage for each unit block in the controlling device 20.

As shown in a circuit diagram of FIG. 4, the switching power supply is a high frequency switching power supply comprising a high frequency transformer 27a, a diode 27b, capacitors 27c to 27e, resistances 27f and 27g, a photo-coupler 27h, a Zener diode 27i and a power supply controlling circuit 27j. The operation frequency thereof is, for example, 130 kilohertz (kHz).

The switching power supply comprises a rectifier having the diode 27b and the capacitor 27c on the secondary side of the high frequency transformer 27a. The above circuit blocks are connected to an output terminal as loads on the subsequent stage to the rectifier.

In the power supply controlling circuit 27j, an enable terminal EN thereof is connected to an output voltage detecting circuit comprising the photo-coupler 27h, the Zener diode 27i and the resistance 27g. When an output voltage of the power supply reaches a predetermined value (for example, not less than 5 volts (V)) and an output voltage of the output voltage detecting circuit is changed to a "Low" level, an input voltage of the enable terminal EN is changed to a "Low" level. As a result, the power supply controlling circuit 27j is in a state that the power supply controlling circuit 27j is operable. When the output voltage of the power supply is below the predetermined value and the output voltage of the output voltage detecting circuit is changed to a "High" level, an input voltage of the enable terminal EN is changed to a "High" level. As a result, the operations of the power supply controlling circuit 27j are stopped.

The power supply controlling circuit 27j monitors the operations of the loads by detecting the change of a current flowing into the primary side of the high frequency transformer 27a according to the operations of the loads, with the drain terminal D. The power supply controlling circuit 27j variably controls the power to be transmitted from the primary side of the high frequency transformer 27 to the secondary side thereof by variably controlling a switching cycle of an incorporated switching transistor (not shown in the figure) connected to the drain terminal D according to the operations of the loads. As a result, the direct current power which is supplied from the output terminal to the loads is properly controlled.

Because the switching power supply is operated at a relatively high frequency, a small type of high frequency transformer 27a can be used. Further, the capacitor 27c for rectification, having a small capacity can be used. Therefore, the power supply therefor can be downsized. The response operations can be carried out at a high speed. The efficiency of the operations can be improved.

Next, the operations of the remote controller 1 according to the embodiment will be explained.

In the remote controller 1 shown in FIG. 1, when the key switch of the key input part 6 is pushed by a user, the key input signal thereof is outputted to the input key holding circuit 7. In the input key holding circuit 7, a key operation carried out by a user is detected on the basis of the key input signal outputted from the key input part 6. The key input signal is held by the input key holding circuit 7. When a plurality of key input signals are inputted at a short time, the key input signal which is initially inputted is held and the held key input signal is outputted to the frequency setting circuit 4. In the input key holding circuit 7, an oscillation signal outputted from the variable oscillator 3 after an oscillation frequency is set according to the key input signal is outputted to the coded pulse generator 8.

Further, in the remote controller 1 shown in FIG. 1, when the key switch of the key input part 6 is continuously pushed by a user, the key input signals are outputted to the input key holding circuit 7 in sequence. In the input key holding circuit 7, the key input signals which are outputted from the key input part 6 in sequence are held at predetermined intervals (for example, at several msec. (milliseconds) intervals). The key operations carried out by a user are continuously detected and held on the basis of the key input signals which are continuously held. The key input signals which are continuously held are outputted to the frequency setting circuit 4 in sequence. Further, in the input key holding circuit 7, oscillation signals outputted from the variable oscillator 3 after oscillation frequencies are set according to the key input signals are outputted to the coded pulse generator 8. In this case, in the input key holding circuit 7, whenever the oscillation frequency is set in sequence according to the key input signal which is held in sequence, the oscillation signal outputted from the variable oscillator 3 is outputted to the coded pulse generator 8 in sequence.

In the coded pulse generator 8, a coded pulse signal including control information (identification information of each lighting device, variable illuminance setting information and the like) corresponding to each lighting device to be controlled is generated on the basis of the oscillation signal outputted from the input key holding circuit 7. The generated coded pulse signal is outputted to the driving circuit 9. In the coded pulse generator 8, when the same oscillation signals are continuously outputted from the input key holding circuit 7, the coded pulse signals including control information (identification information of each lighting device, variable illuminance setting information and the like) corresponding to each lighting device to be controlled are continuously generated. The coded pulse signals which are continuously generated are outputted to the driving circuit 9 in sequence.

In the driving circuit 9, the drive of the transmitting circuit 10 is controlled on the basis of the coded pulse signal outputted from the coded pulse generator 8. An infrared signal or a radio signal having a predetermined frequency, which includes the control code corresponding to each lighting device to be controlled, is transmitted from the transmitting circuit 10 to the controlling device 20. Further, in the driving circuit 9, when the coded pulse signals are continuously outputted from the coded pulse generator 8, the drive of the transmitting circuit 10 is continuously controlled on the basis of the coded pulse signals which are continuously outputted. Then, infrared signals or radio signals, which include the control code corresponding to each lighting device to be controlled, are transmitted from the transmitting circuit 10 in sequence.

Because the infrared signal having a predetermined frequency (for example, 38 kilohertz (kHz)) or the radio signals having a predetermined frequency (for example, 230 megahertz (MHz)) is transmitted from the remote controller 1, it is not necessary that a user directs the remote controller 1 toward the attached controlling device 20.

In the controlling device 20 shown in FIG. 2, the infrared signal or the radio signal, which is transmitted by the transmitting circuit 10 of the remote controller 1 shown in FIG. 1, is received by the receiver of the receiving and amplifying circuit 21. The received signal received by the receiver is amplified by the amplifier at a predetermined amplification factor in order to output it to the demodulator 22. Further, in the receiving and amplifying circuit 21, the infrared signals or the radio signals, which are continuously transmitted by the transmitting circuit 10, are continuously received by the receiver. The received signals which are continuously received by the receiver, are amplified by the amplifier at a predetermined amplification factor in sequence, in order to output them to the demodulator 22 in sequence.

In the demodulator 22, the amplified received signal outputted from the receiving and amplifying circuit 21 is demodulated in order to extract a coded pulse signal. The extracted coded pulse signal is outputted to the buffer 23. In the buffer 23, the waveform of the coded pulse signal outputted from the demodulator 22 is reshaped in order to the reshaped signal to the decoder 24. Further, in the demodulator 22, when the amplified received signals are continuously outputted from the receiving and amplifying circuit 21, the received signals which are continuously outputted, are demodulated in sequence in order to extract coded pulse signals. The coded pulse signals extracted in sequence are outputted to the buffer 23 in sequence. In the buffer 23, the waveforms of the coded pulse signals which are continuously outputted from the demodulator 22, are reshaped in sequence in order to output the reshaped signals to the decoder 24 in sequence.

In the decoder 24, the coded pulse signal outputted from the buffer 23 is decoded. A control signal included in the coded pulse signal and corresponding to a lighting device to be controlled, is extracted. The extracted control signal is outputted to the power control unit 25. Further, in the decoder 24, when the coded pulse signals are continuously outputted from the buffer 23, the coded pulse signals which are continuously outputted, are decoded in sequence. The control signals included in the coded pulse signals and corresponding to an lighting device to be controlled, are extracted in sequence. The extracted control signals are outputted to the power control unit 25 in sequence.

In power control unit 25, the waveforms of the synchronous signals outputted from the synchronizing/clock signal generating circuit 26 in sequence, are reshaped by the buffer 25a in order to output them to the PLL circuit 25d in sequence. The waveforms of the clock signals outputted from the synchronizing/clock signal generating circuit 26 in sequence, are reshaped by the buffer 25b in order to output them to the controlling circuit 25e in sequence. The waveform of the control signal outputted from the decoder 24, is reshaped by the buffer 25c in order to output it to the controlling circuit 25e. Further, in the buffer 25c, when the control signals are continuously outputted from the decoder 24, the waveforms thereof are reshaped in sequence in order to output the controlling circuit 25e in sequence.

In the PLL circuit 25d, the phases of the synchronous signals outputted from the buffer 25a in sequence are fixed in order to output them to the conductive angle resistor 25f and the starting point resistor 25g.

In the controlling circuit 25e, a selection signal for selecting a lighting device to be controlled is outputted to the driving switch unit 25j in accordance with a control information (an identification information of a light device, a variable illuminance setting information thereof and the like) included in the control signal outputted from the buffer 25c. Numeral data indicative of a phase angle starting point for setting a phase angle at which a supply of an alternating current power for the lighting device to be controlled starts, are generated in accordance with the variable illuminance setting information and the clock signal outputted from the buffer 25b. The numeral data are outputted to the conductive angle resistor 25f and the starting point resistor 25g.

In the controlling circuit 25e, when the control signals are continuously outputted from the buffer 25c, the control signals are memorized in sequence. The selection signals for selecting a lighting device to be controlled are outputted to the driving switch unit 25j in sequence in accordance with a control information (an identification information of a lighting device, a variable illuminance setting information thereof and the like) included in the control signals. The numeral data indicative of a phase angle starting point for setting a phase angle at which a supply of an alternating current power for the lighting device to be controlled starts, are generated in sequence in accordance with the variable illuminance setting information and the clock signal outputted from the buffer 25b. The numeral data are outputted to the conductive angle resistor 25f and the starting point resistor 25g in sequence.

In the conductive angle resistor 25f, the synchronous signal waveform data outputted from the PLL circuit 25d in sequence are held by synchronizing with the clock signal in sequence. At the timing of inputting the numeral data from the controlling circuit 25g, the output of the synchronous signal waveform data held in sequence to the comparator 25h starts.

In the starting point resistor 25g, the numeral data outputted from the controlling circuit 25e are held by synchronizing with the clock signal. At the timing of inputting the synchronous signal from the controlling circuit 25g, the held numeral data are repeatedly outputted to the comparator 25h.

In the starting point resistor 25g, the numeral data is held until the next numeral data to be held is outputted from the controlling circuit 25e.

In the comparator 25h, the conductive angle of the synchronous signal waveform data outputted from the conductive angle resistor 25f in sequence is repeatedly compared with the numeral data which is repeatedly outputted from the starting point resistor 25g. The result of the comparison ((conductive angle) - (numeral data) : phase difference) is outputted to the output servo circuit 25i in sequence.

In the output servo circuit 25i, when the result of the comparison (phase difference) outputted from the comparator 25h becomes not less than a predetermined value, the driving signals for setting a conducting time corresponding to the phase difference are generated in sequence. The driving signals are outputted to the driving switch to be controlled, which is selected by the controlling circuit 25e, in the driving switch unit 25j in sequence.

In the driving switch unit 25j, when the driving switch for driving a lighting device to be controlled is selected by the controlling circuit 25e and the driving signal is outputted from the output servo circuit 25i to the selected driving switch, an alternating current power supplied by an external alternating current power supply, is supplied for a lighting device to be controlled during the conducting time set by the driving signal. The illuminance of the lighting device to be controlled is adjusted to an illuminance designated by the remote controller 1.

In the driving switch unit 25j, in case that the selection signals are continuously outputted from the controlling circuit 25e, when the driving signals are outputted in sequence from the output servo circuit 25i to the driving switch selected by the selection signal, an alternating current power supplied by an external alternating current power supply (not shown in the figure), is supplied for a lighting device to be controlled in sequence during the conducting time set in sequence by the driving signals which are continuously outputted. The illuminance of the lighting device to be controlled, is cyclically and continuously controlled at an optical illuminance designated by the remote controller 1 from a light-out state to a maximum illuminance.

FIG. 5A shows one concrete example of functions assigned to each key 6a to 6g of the key input part 6 in the remote controller 1. In FIG. 5A, a function "ALL ON/OFF" for operating ON/OFF state of all the lighting 1 to 6 together is assigned to a key 6a. Functions "LIGHTING 1" to "LIGHTING 6" are assigned to keys 6b to 6g, respectively. Each function is one for operating ON/OFF state of each lighting 1 to 6 and adjusting each illuminance of lighting 1 to 6, separately.

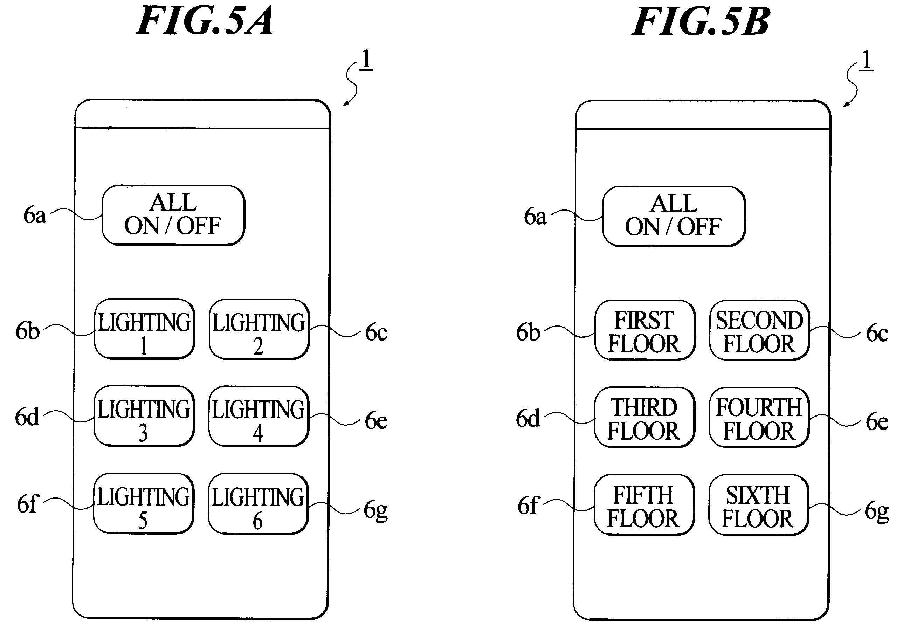

FIG. 5B shows another concrete example of functions assigned to each key 6a to 6g of the key input part 6 in the remote controller 1. In FIG. 5B, a function "ALL ON/OFF" for operating ON/OFF state of all the lighting on the first to sixth floors together is assigned to a key 6a. Functions "FIRST FLOOR" to "SIXTH FLOOR" are assigned to keys 6b to 6g, respectively. Each function is one for operating ON/OFF state of lighting devices on each of the first to sixth floors and adjusting illuminance of the lighting devices on each floor, separately.

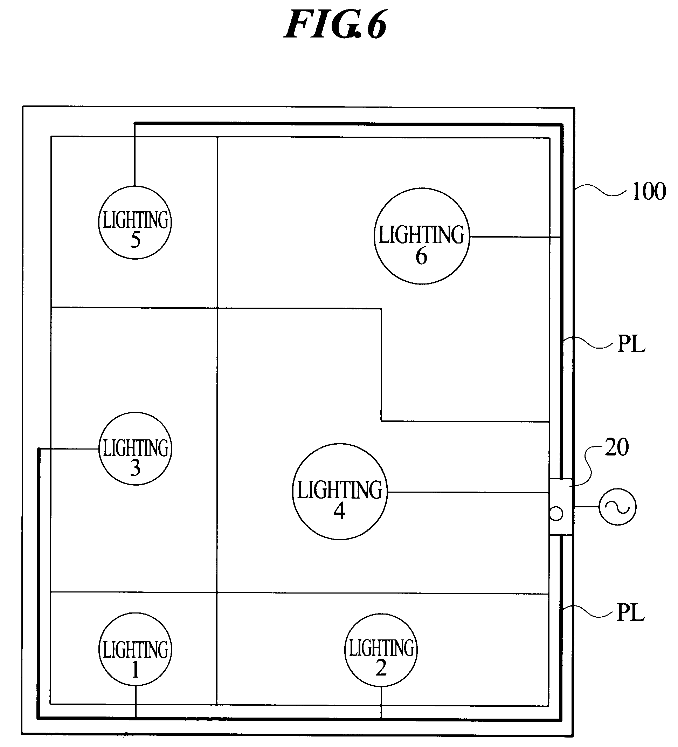

FIG. 6 shows an example of an arrangement of lighting in a building in accordance with the key assignment of the key input part 6 of the remote controller 1 shown in FIG. 5A. In FIG. 6, the lighting 1 to the lighting 6 are arranged in six rooms of a building 100. Power lines PL connect the controlling device 20 installed in a wall of a room in which the lighting 4 is disposed, to each of the lighting 1 to the lighting 6. In this case, by directing the remote controller 1 shown in FIG. 5A toward the controlling device 20 in the room in which the lighting 4 is disposed and by operating the key input part 6, it is possible to operate the ON/OFF state of all the lighting 1 to 6 in six rooms together and to operate the ON/OFF state of each lighting 1 to 6 and adjust each illuminance of lighting 1 to 6, separately.

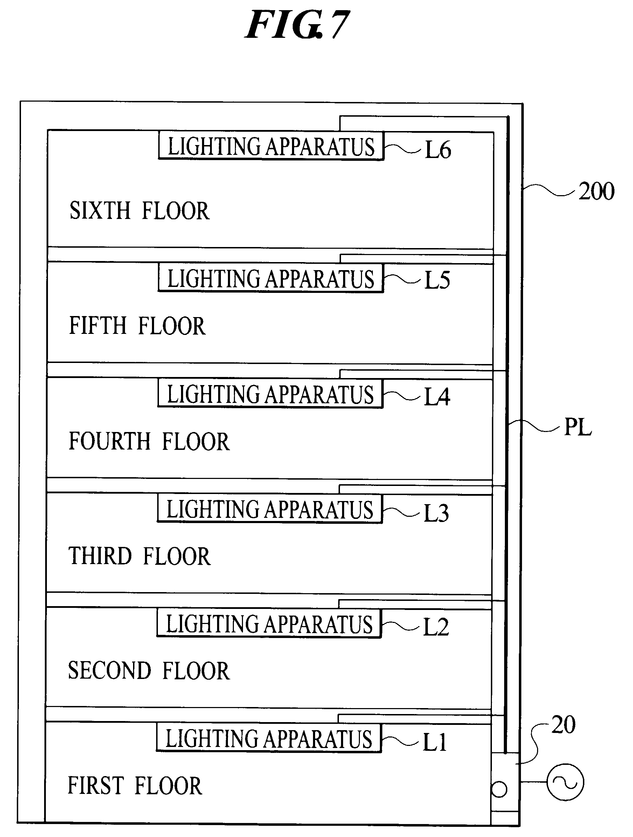

FIG. 7 shows an example of an arrangement of lighting apparatuses in a building in accordance with the key assignment of the key input part 6 of the remote controller 1 shown in FIG. 5B. In FIG. 6, the lighting apparatus L1 to the lighting apparatus L6 are arranged on each floor in a six-storied building 200. A power line PL connects the controlling device 20 installed in a wall of the first floor, to each of the lighting apparatus L1 to the lighting apparatus L6 on each floor. In this case, by directing the remote controller 1 shown in FIG. 5B toward the controlling device 20 on the first floor and by operating the key input part 6, it is possible to operate the ON/OFF state of all the lighting apparatuses L1 to L6 on six floors together and to operate the ON/OFF state of each lighting apparatuses L1 to L6 on each floor and adjust each illuminance of the lighting apparatuses L1 to L6, separately.

By operating the key 6a "ALL ON/OFF" of the key input part 6 of the remote controller 1 shown in FIG. 5A, it is possible to operate the ON/OFF state of the lighting 1 to 6 in all the rooms together. By operating the key 6a "ALL ON/OFF" of the key input part 6 of the remote controller 1 shown in FIG. 5B, it is possible to operate the ON/OFF state of the lighting apparatuses on all the floors together.

As described above, because the remote control system according to the embodiment is applied to a plurality of rooms or a building of a company, to which a plurality of lighting device are attached, it is possible for a user to control the light-on/light-out state of a lighting device in a desired room or on a desired floor or to control the illluminance of a lighting device in a desired room or on a desired floor by operating the switch corresponding to the lighting device to be controlled with the remote controller 1 disposed close at hand in the room in which the controlling device 20 is installed or on the floor on which the controlling device 20 is installed. Further, because the operating states of a plurality of different types of lighting devices having different functions are controlled by one remote controller, it is not necessary that one remote controller is selected from a plurality of remote controllers or one fixed switch is selected from a plurality of fixed switches according to the lighting device to be controlled, like an earlier development. It is possible that a user operates the remote control system more easily. It is more convenient for a user to use the remote control system.

Although one controlling device 20 is installed in one room or on one floor in order to centralizedly control the lighting device in another room or on another floor like the examples shown in FIGS. 6 and 7, the present invention is not limited to this. In case that the consumption power of the electronic apparatuses exceeds a predetermined power capacity within which the controlling device 20 can control the supply power, the controlling device 20 may be installed in each room or on each floor.

Because the remote controller 1 comprises the input key holding circuit 7 for holding an initial key operation, for example, when a plurality of input keys are operated for a short time, only the initial key operation is valid. Therefore, a plurality of lighting devices are prevented from malfunctioning. The remote control system becomes more reliable.

Because the control circuit portion for controlling the supply power for a plurality of electronic apparatuses to be controlled, is constructed by a logic circuit having the conductive angle resistor 25f, the starting point resistor 25g, the comparator 25h and the like in the controlling device 20, the controlling device can be compacted and can be manufactured at a low cost. Further, the cost of installing the remote control system can decrease. Because the controlling device can be compacted, the space for installing the remote control system can be small. The position for installing the remote control system can be set optionally.

Because the communication between the remote controller 1 and the controlling device 20 is carried out by a wireless communication, the position for installing the controlling device can be set optionally according to the positions for installing the lighting devices to be controlled. The remote control system can be installed more freely. Because the consumption power of the remote controller can considerably decrease by a wireless communication using, for example, weak radio wave, the running cost thereof can decrease.

Although it is explained the lighting device is used as the electronic apparatus to be controlled in the above embodiment, the present invention is not limited to this. As an another electronic apparatus, an air conditioner, a domestic appliance or the like may be used. It is possible to assign a plurality of different types of electronic apparatuses to the control keys of the remote controller 1.

Depending on the type of switch of the remote controller 1, not only a signal for operating a simple function, such as a signal indicative of the presence or absence of an operation for an electronic apparatus, but also a signal for operating more complicated function, can be transmitted from the remote controller 1 to the controlling device 20 in order to control an electronic apparatus according to the signal for operating more complicated function. Therefore, it is possible to carry out the complicated control of the electronic apparatus only by operating the remote control disposed close at hand.

Because a modulated control information signal is transmitted and received between the remote controller 1 and the controlling device 20 by using an infrared signal having a predetermined frequency (for example, 38 kilohertz (kHz)) or a wireless communication using a radio signal having a predetermined frequency (for example, 230 megahertz (MHz)), it can be hard that the remote control system is influenced by an electromagnetic wave caused by other electronic apparatuses or disturbance.

In the driving switch unit 25j of the power control unit 25 of the controlling device 20, in case that selection signals are continuously outputted from the controlling circuit 25e according to continuous operations of an electronic apparatus operation key in the key input part 6 of the remote controller 1, the following operations are carried out. When the driving signals are outputted in sequence from the output servo circuit 25i to the driving switch selected by the selection signal, an alternating current power supplied by an external alternating current power supply (not shown in the figure), is supplied for a lighting device to be controlled in sequence during the conducting time set in sequence by the driving signals which are continuously outputted. The illuminance of the lighting device to be controlled, is cyclically and continuously controlled at an optical illuminance designated by the remote controller 1 from a light-out state to a maximum illuminance.

Therefore, by continuously pushing the electronic apparatus operation keys in the key input part 6 of the remote controller 1, such as the keys 6b to 6g to which the lighting 1 to the lighting 6 are assigned as shown in FIG. 5A, respectively, it is possible to continuously control the illuminance of the lighting to be controlled at an optical illuminance from a light-out state to a maximum illuminance.

Although the operations for a plurality of lighting devices are assigned to the keys 6a to 6g in the key input part 6 of the remote controller 1 as shown in FIGS. 5A and 5B, the present invention is not limited to this. The other electronic apparatuses may be used as the objects to be controlled by carrying out the key operation. Further, the present invention is not limited to the composition of keys in the key input part 6 of the remote controller 1 shown in FIGS. 5A and 5B. The composition of keys may be modified optically according to the number of the electronic apparatuses controlled by the controlling device 20.

According to the present invention, because a plurality of electronic apparatuses are assigned to a plurality of switches which the terminal device comprises, it is possible for a user to easily control an operating state of a desired electronic apparatus only by operating the switch corresponding to the electronic apparatus to be controlled with the terminal device disposed close at hand. Further, because the operating states of a plurality of different types of electronic apparatuses having different functions are controlled by one terminal device, it is not necessary that one terminal device is selected from a plurality of terminal devices according to the electronic apparatus to be controlled, like an earlier development. It is possible that a user operates the remote control system more easily. It is more convenient for a user to use the remote control system.

Further, because the supply power for a plurality of electronic apparatuses can be easily controlled by one switch operation, it is possible that a user operates the remote control system more easily. It is more convenient for a user to use the remote control system.

Because the supply power for a plurality of electronic apparatuses arranged in a plurality of different rooms respectively, can be easily controlled by a switch operation in one terminal device, it is possible that a user operates the remote control system more easily. It is more convenient for a user to use the remote control system.

Because the supply power for a plurality of electronic apparatuses arranged on a plurality of different floors respectively, can be easily controlled by a switch operation in one terminal device, it is possible that a user operates the remote control system more easily. It is more convenient for a user to use the remote control system.

Because the control circuit portion for controlling the supply power for a plurality of electronic apparatuses to be controlled, is constructed by a logic circuit, the controlling device can be compacted and can be manufactured at a low cost. Further, the cost of installing the remote control system can decrease. Because the controlling device can be compacted, the space for installing the remote control system can be small. The position for installing the remote control system can be set optionally.

Because the supply power for a plurality of electronic apparatuses to be controlled, which are assigned to each key of the terminal device, can be adjusted only by continuing to push the key, for example, the illuminance of the lighting device can be easily adjusted.

For example, when a plurality of switches are operated for a short time, only the initial key operation is valid. Therefore, a plurality of electronic apparatuses are prevented from malfunctioning. The remote control system becomes more reliable.

Because the communication between the terminal device and the controlling device is carried out by a wireless communication, the position for installing the controlling device can be set optionally according to the positions for installing the electronic apparatuses to be controlled. The remote control system can be installed more freely. Because the consumption power of the terminal device can considerably decrease by a wireless communication using, for example, weak radio wave, the running cost thereof can decrease.

Because the remote control system which can control a plurality of lighting devices by using a remote controller disposed close at hand, is adapted to a plurality of lighting devices which are disposed in a building and of which the light-on/light-off states have been often controlled by a switch box or the like, it is possible that a user operates the remote control system more easily when a plurality of lighting devices are turned on or off. It is more convenient for a user to use the remote control system. That is, the number of the remote controllers used in the remote control system according to the present invention is small as compared with a remote control system according to an earlier development. A number of lighting devices can be easily controlled. The cost for the lighting device can decrease.

The entire disclosure of Japanese Patent Applications No. Tokugan-Hei 11-343684 filed on December 2, 1999 and No. Tokugan 2000-237334 filed on August 4, 2000 including specification, claims drawings and summary are incorporated herein by reference in its entirety.

## Claims

1. A remote control system comprising:
a controlling device which is connected to a plurality of electronic apparatuses, and which has a controlling circuit for controlling each operating state of the plurality of electronic apparatuses by controlling a supply power for the plurality of electronic apparatuses, and
a terminal device for transmitting a control signal corresponding to each operating state of the plurality of electronic apparatuses, to the controlling device through a wireless communication,
wherein the terminal device comprises:
an input part comprising a plurality of switches corresponding to the plurality of electronic apparatuses, respectively,
a control signal generating circuit for detecting an operation signal outputted by operating each switch of the input part to generate a control signal including an identification information for identifying an electronic apparatus to be controlled in accordance with the operation signal,
a coding circuit for coding the control signal generated by the control signal generating circuit to output a coded signal, and
a transmitting circuit for modulating the coded signal outputted from the coding circuit to transmit a modulated signal to the controlling device;
the controlling device comprises:
a receiving circuit for receiving the modulated signal transmitted by the transmitting circuit of the terminal device,
a demodulating circuit for demodulating the modulated signal received by the receiving circuit to output a demodulated signal, and
a decoding circuit for extracting the control signal including the identification information for identifying the electronic apparatus to be controlled, from the demodulated signal outputted from the demodulating circuit, and for decoding the control signal to output a decoded control signal; and
the controlling circuit controls the supply power for the electronic apparatus to be controlled in accordance with the control signal decoded by the decoding circuit.

2. The remote control system as claimed in claim 1, wherein the input part of the terminal device further comprises a common switch for operating the plurality of electronic apparatuses together;
the control signal generating circuit generates a common control signal including a plurality of pieces of identification information for identifying the plurality of electronic apparatuses in accordance with an operation signal outputted when an operation of the common switch of the input part is detected;
the coding circuit codes the common control signal generated by the control signal generating circuit to output a coded signal;
the transmitting circuit modulates the coded signal outputted from the coding circuit to transmit a modulated signal to the controlling device;
the decoding circuit of the controlling device extracts the common control signal from the demodulated signal outputted from the demodulating circuit and decodes the common control signal to output a decoded common control signal; and
the controlling circuit controls the supply power for the plurality of electronic apparatuses to be controlled together in accordance with the decoded common control signal outputted from the decoding circuit.

3. The remote control system as claimed in claim 1, wherein the plurality of electronic apparatuses are arranged in a plurality of different rooms, respectively;
the input part of the terminal device comprises a plurality of switches by room, for operating the plurality of electronic apparatuses arranged in the plurality of different rooms by one room;
the control signal generating circuit detects an operation signal outputted by operating each switch by room to generate a control signal by room, which includes an identification information for identifying an electronic apparatus to be controlled, in accordance with the operation signal outputted by operating each switch by room;
the coding circuit codes the control signal by room, which is generated by the control signal generating circuit, to output a coded signal;
the transmitting circuit modulates the coded signal outputted from the coding circuit to transmit a modulated signal to the controlling device;
the decoding circuit of the controlling device extracts the control signal by room from the demodulated signal outputted from the demodulating circuit and decodes the control signal by room to output a decoded control signal by room; and
the controlling circuit controls the supply power for an electronic apparatus to be controlled, which is arranged in a room corresponding to the decoded control signal by room, which is outputted from the decoding circuit.

4. The remote control system as claimed in claim 1, wherein the plurality of electronic apparatuses are arranged on a plurality of different floors in a building, respectively;
the input part of the terminal device comprises a plurality of switches by floor, for operating the plurality of electronic apparatuses arranged on the plurality of different floors by one floor;
the control signal generating circuit detects an operation signal outputted by operating each switch by floor to generate a control signal by floor, which includes an identification information for identifying an electronic apparatus to be controlled, in accordance with the operation signal outputted by operating each switch by floor;
the coding circuit codes the control signal by floor, which is generated by the control signal generating circuit, to output a coded signal;
the transmitting circuit modulates the coded signal outputted from the coding circuit to transmit a modulated signal to the controlling device;
the decoding circuit of the controlling device extracts the control signal by floor from the demodulated signal outputted from the demodulating circuit and decodes the control signal by floor to output a decoded control signal by floor; and
the controlling circuit controls the supply power for an electronic apparatus to be controlled, which is arranged on a floor corresponding to the decoded control signal by floor, which is outputted from the decoding circuit.

5. The remote control system as claimed in claim 1, wherein the controlling circuit of the controlling device further comprises:
a conductive amount setting circuit for setting a conductive amount of the supply power for an electronic apparatus to be controlled, in accordance with the control signal decoded by the decoding circuit, and
a supply power controlling circuit for controlling the supply power to be supplied for the electronic apparatus to be controlled, in accordance with the conductive amount set by the conductive amount setting circuit.

6. The remote control system as claimed in claim 5, wherein the controlling circuit of the controlling device further comprises a conductive amount storing circuit for storing the conductive amount set by the conductive amount setting circuit at predetermined time intervals in sequence; and
the supply power controlling circuit cyclically controls the supply power to be supplied for the electronic apparatus to be controlled from a minimum value to a maximum value, in accordance with the conductive amount stored in the conductive amount storing circuit in sequence.

7. The remote control system as claimed in claim 1, wherein the control signal generating circuit of the terminal device further comprises an operating state holding circuit for holding an operation signal of a switch operated initially, when the plurality of switches of the input part are operated; and
the control signal generating circuit generates the control signal including the identification information for identifying the electronic apparatus to be controlled, in accordance with the operation signal held by the operating state holding circuit.

8. The remote control system as claimed in claim 1, wherein the transmitting circuit of the terminal device and the receiving circuit of the controlling circuit comprise a set of wireless communication function for transmitting and receiving the modulated signal by using a wireless signal having a predetermined frequency.

9. The remote control system as claimed in claim 1, wherein the controlling device controls light-on states of a plurality of lighting devices as the plurality of electronic apparatuses to be controlled.

10. A method for controlling a remote control system comprising a controlling device which is connected to a plurality of electronic apparatuses, and which has a controlling circuit for controlling each operating state of the plurality of electronic apparatuses by controlling a supply power for the plurality of electronic apparatuses, and a terminal device for transmitting a control signal corresponding to each operating state of the plurality of electronic apparatuses, to the controlling device through a wireless communication by operating an input part having a plurality of switches corresponding to each electronic apparatus; the method comprising the steps of:
in the terminal device,
detecting an operation signal outputted by operating each switch of the input part and generating a control signal including an identification information for identifying an electronic apparatus to be controlled in accordance with the operation signal outputted by operating each switch of the input part,
coding the generated control signal to output a coded signal, and
modulating the outputted coded signal and transmitting a modulated signal to the controlling device; and
in the controlling device,
receiving the modulated signal transmitted by the terminal device,
demodulating the received modulated signal to output a demodulated signal,
extracting the control signal including the identification information for identifying the electronic apparatus to be controlled, from the outputted demodulated signal, and decoding the control signal to output a decoded control signal, and
controlling the supply power for the electronic apparatus to be controlled in accordance with the decoded control signal.

11. The method as claimed in claim 10, wherein the input part of the terminal device further comprises a common switch for operating the plurality of electronic apparatuses together;
in the terminal device,
the control signal generating step is carried by generating a common control signal including a plurality of pieces of identification information for identifying the plurality of electronic apparatuses in accordance with an operation signal outputted when an operation of the common switch of the input part is detected,
the coding step is carried out by coding the common control signal generated by the control signal generating step to output a coded signal, and
the transmitting step is carried out by modulating the coded signal outputted by the coding step and transmitting a modulated signal to the controlling device; and
in the controlling device,
the decoding step is carried out by extracting the common control signal from the demodulated signal outputted by the demodulating step and decoding the common control signal to output a decoded common control signal, and
the controlling step is carried out by controlling the supply power for the plurality of electronic apparatuses to be controlled together in accordance with the decoded common control signal outputted by the decoding step.

12. The method as claimed in claim 10, wherein the plurality of electronic apparatuses are arranged in a plurality of different rooms, respectively;
the input part of the terminal device comprises a plurality of switches by room, for operating the plurality of electronic apparatuses arranged in the plurality of different rooms by one room;
in the terminal device,
the control signal generating step is carried out by detecting an operation signal outputted by operating each switch by room and is carried out by generating a control signal by room, which includes an identification information for identifying an electronic apparatus to be controlled, in accordance with the operation signal outputted by operating each switch by room,
the coding step is carried out by coding the control signal by room, which is generated by the control signal generating step, to output a coded signal, and
the transmitting step is carried out by modulating the coded signal outputted by the coding step to transmit a modulated signal to the controlling device; and
in the controlling device,
the decoding step is carried out by extracting the control signal by room from the demodulated signal outputted by the demodulating step and is carried out by decoding the control signal by room to output a decoded control signal by room, and
the controlling step is carried out by controlling the supply power for an electronic apparatus to be controlled, which is arranged in a room corresponding to the decoded control signal by room, which is outputted by the decoding step.

13. The method as claimed in claim 10, wherein the plurality of electronic apparatuses are arranged on a plurality of different floors in a building, respectively;
the input part of the terminal device comprises a plurality of switches by floor, for operating the plurality of electronic apparatuses arranged on the plurality of different floors by one floor;
in the terminal device,
the control signal generating step is carried out by detecting an operation signal outputted by operating each switch by floor and is carried out by generating a control signal by floor, which includes an identification information for identifying an electronic apparatus to be controlled, in accordance with the operation signal outputted by operating each switch by floor,
the coding step is carried out by coding the control signal by floor, which is generated by the control signal generating step, to output a coded signal, and
the transmitting step is carried out by modulating the coded signal outputted by the coding step to transmit a modulated signal to the controlling device; and
in the controlling device,
the decoding step is carried out by extracting the control signal by floor from the demodulated signal outputted by the demodulating step and is carried out by decoding the control signal by floor to output a decoded control signal by floor, and
the controlling step is carried out by controlling the supply power for an electronic apparatus to be controlled, which is arranged on a floor corresponding to the decoded control signal by floor, which is outputted by the decoding step.

14. The method as claimed in claim 10, wherein the controlling step of the controlling device is further carried out by setting a conductive amount of the supply power for an electronic apparatus to be controlled, in accordance with the control signal decoded by the decoding step, and is carried out by controlling the supply power to be supplied for the electronic apparatus to be controlled, in accordance with the conductive amount set by the conductive amount setting step.

15. The method as claimed in claim 14, wherein the controlling step of the controlling device is further carried out by storing the conductive amount set by the conductive amount setting step at predetermined time intervals in sequence; and
the supply power controlling step is carried out by cyclically controlling the supply power to be supplied for the electronic apparatus to be controlled from a minimum value to a maximum value, in accordance with the conductive amount stored by the conductive amount storing step in sequence.

16. The method as claimed in claim 10, wherein the control signal generating step of the terminal device is further carried out by holding an operation signal of a switch operated initially, when the plurality of switches of the input part are operated; and
the control signal generating step is carried out by generating the control signal including the identification information for identifying the electronic apparatus to be controlled, in accordance with the operation signal held by the operation signal holding step.

17. The method as claimed in claim 10, wherein the transmitting step of the terminal device and the receiving step of the controlling circuit are carried out by transmitting and receiving the modulated signal by using a wireless signal having a predetermined frequency.

18. The method as claimed in claim 10, wherein the controlling step of the controlling device is carried out by controlling light-on states of a plurality of lighting devices as the plurality of electronic apparatuses to be controlled.

19. A remote control system comprising:
a terminal device for outputting a control signal corresponding to each operating state of a plurality of electronic apparatuses, and
a controlling device for controlling each operating state of the plurality of electronic apparatuses in accordance with the control signal outputted from the terminal device;
wherein the terminal device comprises an input part for inputting data relating to an operating state of an electronic apparatus to be controlled, a control signal generating circuit for generating a control signal in accordance with the input data, and a transmitter for transmitting the control signal generated by the control signal generating circuit to the controlling device; and
the controlling device comprises a receiver for receiving the control signal transmitted by the transmitter, and a power control circuit for controlling a supply power to be supplied for the electronic apparatus to be controlled in accordance with the control signal received by the receiver.
